# EUROPÄISCHE PATENTSCHRIFT

(11) **EP 2 564 671 B1**
(45) Veröffentlichungstag und Bekanntmachung des Hinweises auf die Patenterteilung: **11.04.2018**
(21) Anmeldenummer: 11716938.3
(22) Anmeldetag: 02.05.2011
(51) Int. Cl.: H05B 37/02, H04M 1/74

(54) **SPANNUNGSFESTE SCHNITTSTELLENSCHALTUNG**
HIGH ELECTRIC STRENGTH INTERFACE CIRCUIT
CIRCUIT D'INTERFACE À RÉSISTANCE DIÉLECTRIQUE

(30) Priorität: 30.04.2010 AT 28110 U; 30.04.2010 DE 202010006269 U
(43) Veröffentlichungstag der Anmeldung: 06.03.2013
(73) Patentinhaber: Tridonic GmbH & Co KG, 6851 Dornbirn (AT)
(72) Erfinder: BÖCKLE, Reinhard, A-6841 Mäder (AT)
(74) Vertreter: Rupp, Christian
(86) Internationale Anmeldenummer: PCT/EP2011/056943
(87) Internationale Veröffentlichungsnummer: WO 2011/135098

(56) Entgegenhaltungen:
- DE-C1- 10 113 367
- FR-A1- 2 495 866
- JP-A- 1 208 094
- JP-A- 1 300 661
- US-B1- 6 192 125
- US-B1- 6 445 144
- US-B1- 6 714 645

## Beschreibung

Die vorliegende Erfindung bezieht sich auf eine spannungsfeste Schnittstellenschaltung, wie sie in elektronischen Geräten, wie beispielsweise in Vorschaltgeräten für Leuchtmittel eingesetzt wird. Über die Schnittstellenschaltung können Daten - und/oder Steuerbefehle zwischen einer Steuereinheit für die Leuchtmittel und einem Vorschaltgerät für Leuchtmittel ausgetauscht werden.

Allgemein sind solche Schnittstellenschaltungen häufig dort anzutreffen, wo unterschiedliche elektronische Schaltanordnungen, beispielsweise über ein Bussystem oder Signalleitungen, verbunden sind. Dabei kann es sein, dass die über die Schnittstellenschaltung gekoppelten elektronischen Schaltungen mit unterschiedlich hohen Betriebsspannungen operieren. Beispielsweise kann bei Vorschaltgeräten für Leuchtmittel das Vorschaltgerät einerseits über eine hohe Betriebsspannung zum Betreiben der Leuchtmittel verfügen, andererseits können aber elektronische Schaltungsteile, beispielsweise zur Ansteuerung der Helligkeit der Lampe, mit einem Bus- oder Signalleitungssystem verbunden sein, an dem im Vergleich zur Betriebsspannung der Leuchtmittel eine relativ kleine Spannung anliegen kann.

Heutzutage sind dabei Schnittstellenschaltungen gebräuchlich, die sowohl digitale Signale wie DALI als auch netzspannungsgebundene Signale wie beispielsweise über einen mit der Netzspannung verbundenen Taster empfangen und verarbeiten können.

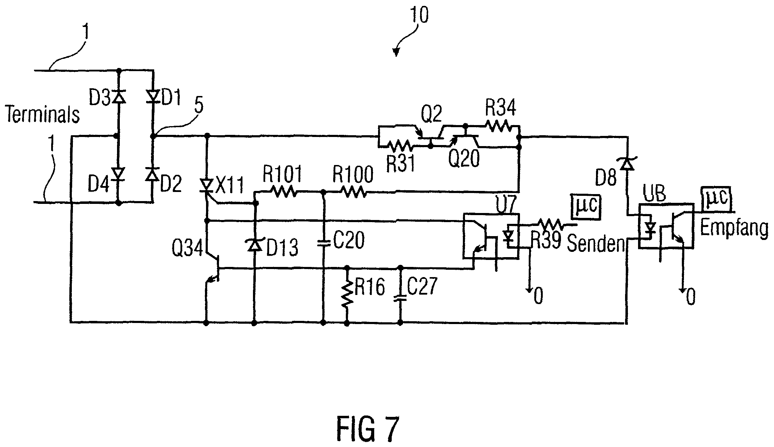

Da es bei der Installation solcher Beleuchtungssysteme zu Verwechslungen der Anschlussleitungen oder auch im Betrieb zu Überspannungen und Spannungspulsen auf dem Bussystem kommen kann, wäre es wünschenswert, eine spannungsfeste Schnittstellenschaltung mit hoher Spannungsfestigkeit einzusetzen. Beispielsweise kann es bei Betätigung eines mit der Netzspannung verbundenen Tasters an den Signalleitungen, durch sogenanntes Tastenprellen, oder durch Schaltvorgänge mit größeren Lastinduktivitäten, hervorgerufen durch Transformatoren, Drosseln usw., die an die Bus- oder Signalleitungen gekoppelt sind, zu Spannungspulsen an der Schnittstellenschaltung komen. Deshalb ist es wünschenswert, eine spannungsfeste Schnittstellenschaltung zu schaffen, so dass es selbst bei Unachtsamkeiten während der elektrischen Installation oder auch aufgrund von anderen Spannungspulsen, die im Bussystem entstehen können, nicht zu einer Zerstörung der Schnittstellenschaltung kommen kann.
Eine Schnittstellenschaltung mit einem schnellen Überspannungsdetektor, der durch eine Zenerdiode und einen Schalttransistors gebildet wird, ist in der Patentschrift DE 101 13 367 C1 (Vossloh-Schwabe Elektronik)offenbart. Die Patentanmeldung US6,714,645 B1 (Sacca et al.) beschreibt eine spannungsfeste Schnittstellenschaltung mit Hilfe einer Darlingtonschaltung, insbesondere konzipiert für eine Telefonanlage. Andere Schnittstellenschaltungen nach dem Stand der Technik verwenden häufig einen Thyristor, um eine Netzspannungsfestigkeit sicherzustellen. In Fig. 7 ist eine solche Schnittstellenschaltung mit einem Thyristor in einem Schaltungsplan dargestellt.
Die Schnittstellenschaltung 10 in Fig. 7 weist Anschlussterminals 1 für Signalleitungen bzw. ein Bussystem auf. Die Signalleitungen werden über eine Cleichzichterschaltung, die durch vier Dioden D1 bis D4 in Grätzschaltungsanordnung gebildet wird, an die restliche Schnittstellenschaltung gekoppelt. Die Netzspannungsfestigkeit der Schnittstellenschaltung 10 wird über den Thyristor X11 sichergestellt. Der Thyristor X11 ist mit einem Transistor Q34 in Serie geschaltet. Ferner umfasst die Schnittstellenschaltung Optokoppler U7 und U8, sowie eine Konstantstromquelle, welche durch die Transistoren Q2, Q20 und den Widerständen R31 und R34 gebildet wird. Die Optokoppler U7 und U8 sind mit einem Mikroprozessor gekoppelt, was durch das Symbol µC angedeutet ist, so dass über die Schnittstellenschaltung 10 zwischen den Terminals 1 und dem Mikroprozessor, der an den mit µC bezeichneten Punkten angeschlossen ist, Daten und Steuerbefehle übertragen werden können. Der Optokoppler U7 steuert in dem Rückkanal Schalter Q34, der in Serie mit dem Thyristor X11 angeordnet ist, an. Der Schalter Q34 ist als Niedervoltschalter ausgeführt, wo hingegen der Thyristor, wie oben bereits erwähnt, die Netzspannungsfestigkeit der Schaltung sicherstellen soll. Das Senden von dem Mikroprozessor zu den Terminals 1 über die Schnittstellenschaltung 10 erfolgt dadurch, dass über den Optokoppler U7 der Schalter Q34 gesteuert wird. Wenn der Schalter Q34 eingeschaltet, also durchgesteuert ist, wird das Potential an der Kathode von dem Thyristor X11 auf ein niedriges Potential gezogen. Falls nun an den Terminals 1 eine Spannung anliegt, wird der Thyristor durchgesteuert und der Knoten 5 an der Gleichrichterschaltung in Richtung eines Massepotentials gezogen. In anderen Worten, es wird eine niederohmige Verbindung zwischen den Anschlussterminals 1 hergestellt. Dadurch kann ein Signal über das Bussystem gesendet werden, wenn an den Terminals 1 eine Spannung anliegt. Das Durchsteuern des Thyristors X11 erfolgt, da am kathodenseitigen Gate des Thyristors eine Spannung über dem Pfad bezüglich des Widerstandes R101 und R100 anliegt, die höher als an der Kathode des Thyristors ist.

Wenn nun beispielsweise die Schnittstellenschaltung 10 auf Seiten der Terminals 1, beispielsweise über einen Taster oder Schalter an eine Netzspannung geschaltet wird, kann es durch Tastenprellen zur Entstehung relativ enger bzw. zeitlich kurzer Störimpulse bis in den Kilovoltbereich kommen. Bei diesen Spannungspulsen spricht man von den sogenannten Signalfolge oder Burstpulsen und bei einer entsprechenden Spannungsfestigkeit einer Schaltung von einer Burstfestigkeit. Bei den Burstpulsen handelt es sich um schnelle transiente Störgrößen, die in der Stromversorgung oder in den Signaleingängen eingekoppelt werden. Diese Burstimpulse können sich durch kurze Wiederholrate und eine niedrige Energie der Kurzzeitstörung auszeichnen. Diese Burstimpulse können durchaus auch zu einer Zerstörung der Schnittstellenschaltung führen, wenn keine Schutzschaltung wie beispielsweise eine Filterschaltung vorgesehen ist.

Falls jedoch größere (Last-) Induktivitäten, wie z. B. Transformatoren, Drosseln, usw. über eine Steuerleitung an die Terminals 1 gekoppelt sind und diese geschaltet werden, können energiereiche Überspannungspulse oder Surge-Impulse, mit Spannungen ebenfalls bis in den Kilovoltbereich entstehen. Bei den Surge-Impulsen handelt es sich um energiereiche transiente Spannungs-Impulse, die sich als transiente Überspannungen bzw. Stoßspannungen, wie sie bei Schalthandlungen in den entsprechenden Leitungen entstehen können, bemerkbar machen.

Zur Filterung bzw. Dämpfung dieser Burst- bzw. Surge-Impulse kann einer Schnittstellenschaltung ein Filter vorgeschaltet sein. Das Filter kann so dimensioniert sein, dass BurstImpulse bis zu einer Spannungserhöhung von einigen 10 Volt eliminiert werden. Bei den Surge-Impulsen kann dies jedoch schwieriger sein. Diese können zwar typischerweise durch das Filter in der Spannungsamplitude stark reduziert werden, aber beispielsweise kann ein 2 kV Spannungspuls trotzdem noch mit einer Amplitude von beispielsweise 1 kV an die Schnittstellenschaltung gelangen. Bei der Verwendung eines Thyristors nach dem Stand der Technik kann nun durch eine steile Flanke solch eines Surgepulses der Thyristor ganz oder teilweise durchgeschaltet werden, da es sich bei dem Thyristor um ein mitgekoppeltes Element handelt. Das "Zünden" des Thyristors kann nun zur sofortigen Zerstörung des nachgeschalteten Transistors Q34 führen, der in Folge der benötigten Stromverstärkung ein Niederspannungstyptransistor, mit einer Kollektor-Emitter-Spannungsfestigkeit von beispielsweise 45 bis 80 Volt, sein kann. Während dieses Zerstörungsvorganges wird nun der Thyristor X11 endgültig vollständig durchgeschaltet und kann dann ebenfalls zerstört werden. Zwar lässt sich mit schaltungstechnischen Maßnahmen dieses Durchschalten bzw. Überkopfzünden des Thyristors etwas beeinflussen, indem beispielsweise eine Kapazität direkt vom Gate an die Kathode des Thyristors geschaltet wird, allerdings kann das Überkopfzünden oft nicht im ausreichenden Maße unterdrückt werden. Der Thyristor X11 wird dann meistens nicht in Folge hoher Spannung, sondern in Folge Leistungsüberlastung zerstört.

In Anbetracht der obigen Ausführungen ist es daher wünschenswert, eine spannungsfeste Schnittstellenschaltung mit einer hohen Spannungsfestigkeit und geringem schaltungstechnischen Aufwand zu schaffen, welche die oben beschriebenen Nachteile vermeidet.

Es ist die daher Aufgabe der vorliegenden Erfindung, eine Schnittstellenschaltung mit verbesserter Spannungsfestigkeit und mit einer relativ einfachen schaltungstechnischen Umsetzung zu schaffen.
Diese Aufgabe wird durch die erfindungsgemäße spannungsfeste Schnittstellenschaltung gemäß Schutzanspruch 1, sowie durch das Vorschaltgerät mit Schnittstellenschaltung gemäß Anspruch 15 und das Beleuchtungssystem für Leuchtmittel gemäß Schutzanspruch 16 gelöst.
Vorteilhafte Weiterbildungen der Erfindung sind dann in den Unteransprüchen angegeben.
Ein Kerngedanke der vorliegenden Erfindung besteht darin, eine spannungsfeste Schnittstellenschaltung mit Hilfe einer Darlingtonschaltung zu schaffen, wobei sich eine hohe Spannungsfestigkeit auf schaltungstechnisch relativ einfache Weise durch Verwendung, von gegenüber einem Thyristor preislich günstigeren, spannungsfesten Transistoren erreichen lässt, die zu dem eine ausreichende Stromverstärkung aufweisen können, um in Abhängigkeit eines Ansteuersignals bestimmte Signalpegel an einem Eingang der Schnittstellenschaltung zu ermöglichen.
Bevorzugte Ausführungsbeispiele der Erfindung werden nachfolgend unter Bezugnahme auf die beiliegenden Zeichnungen näher erläutert. Es zeigen:
- Fig. 1: eine schematische Darstellung einer spannungsfesten Schnittstellenschaltung gemäß einem Ausführungsbeispiel der vorliegenden Erfindung;
- Fig. 2: eine schematische Darstellung einer spannungsfesten Schnittstellenschaltung gemäß einem weiteren Ausführungsbeispiel der vorliegenden Erfindung;
- Fig. 3: einen Schaltplan einer spannungsfesten Schnittstellenschaltung gemäß einem weiteren Ausführungsbeispiel;
- Fig. 4: einen Schaltplan einer spannungsfesten Schnittstellenschaltung gemäß einem weiteren Ausführungsbeispiel;
- Fig. 5: eine schematische Darstellung eines Vorschaltgerätes für Leuchtmittel mit einer spannungsfesten Schnittstellenschaltung gemäß einem Ausführungsbeispiel der vorliegenden Erfindung;
- Fig. 6a-b: Beleuchtungssysteme mit Vorschaltgeräten, welche eine spannungsfeste Schnittstellenschaltung aufweisen; und
- Fig. 7: eine Schnittstellenschaltung mit Thyristor nach dem Stand der Technik.

Bezüglich der nachfolgenden Beschreibung der Ausführungsbeispiele der vorliegenden Erfindung sollte beachtet werden, dass in den unterschiedlichen Figuren für funktional identische bzw. gleichwirkende oder funktionsgleiche, äquivalente Elemente oder Schritte zur Vereinfachung in der gesamten Beschreibung die gleichen Bezugszeichen verwendet werden. Diese Elemente mit gleichen Bezugszeichen sind somit in den verschiedenen Ausführungsbeispielen untereinander austauschbar.

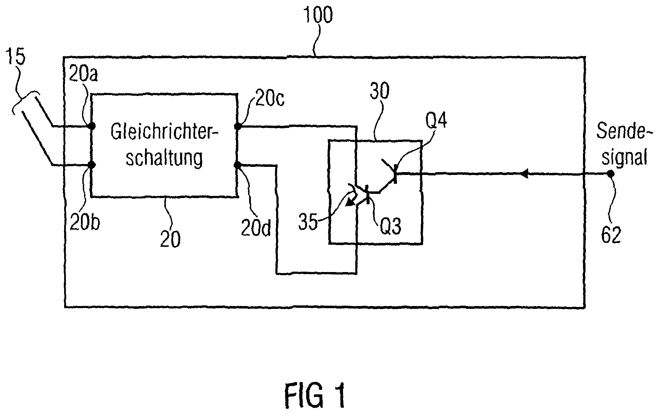

In Fig. 1 ist ein schematisches Blockschaltbild einer spannungsfesten Schnittstellenschaltung 100 gemäß einem Ausführungsbeispiel der vorliegenden Erfindung dargestellt. Die spannungsfeste Schnittstellenschaltung 100 weist eine Gleichrichterschaltung 20 auf, die ausgebildet ist, um in Abhängigkeit einer an Gleichrichtereingangsanschlüssen 20a, 20b anliegenden Gleichrichtereingangsspannung an Gleichrichteranschlüssen 20c, 20d eine gleichgerichtete Gleichrichterausgangsspannung bereitzustellen. Ferner weist die spannungsfeste Schnittstellenschaltung 100 eine Darlingtonschaltung 30 mit zumindest zwei Transistoren Q3 und Q4 auf, wobei die Darlingtonschaltung 30 einen in Abhängigkeit von einem Ansteuersignal 62 steuerbaren ausgangsseitigen Strompfad 35 aufweist. Der ausgangsseitige steuerbare Strompfad 35 ist zwischen die Gleichrichterausgangsanschlüsse 20c und 20d gekoppelt. Ferner ist der ausgangsseitige steuerbare Strompfad 35 ausgebildet, um zwischen den Gleichrichterausgangsanschlüssen 20c und 20d eine in Abhängigkeit von dem Ansteuersignal 62 veränderbare elektrische Last zu bilden. Das heißt, in Abhängigkeit von dem Ansteuersignal kann der Darlingtontransistor 32 mit dem ausgangsseitigen steuerbaren Strompfad 35 durchsteuern, so dass die Gleichrichterausgangsanschlüsse 20c und 20d zumindest näherungsweise "kurz geschlossen" werden. In Abhängigkeit von dem Ansteuersignal 62 können die Gleichrichterausgangsanschlüsse 20c und 20d über die Darlingtonschaltung 30 also "niederohmig" verbunden werden, in dem Sinne, dass bei einer vorgegebenen Spannung über den ausgangseitigen steuerbaren Strompfad ein vergleichsweiser großer Strom durch den steuerbaren Strompfad 35 fließt. Falls an dem Bussystem 15 eine Spannungsquelle mit einem bestimmten Innenwiderstand angeschlossen ist, kann durch diesen "Kurzschluss" an den Gleichrichtereingangsanschlüssen ein erster Signalpegel mit niedriger Spannung erzeugt werden. Durch das Ansteuersignal 62 kann also die Darlingtonschaltung durchgesteuert werden, so dass, falls eine Spannung an den Gleichrichtereingangsanschlüssen anliegt, ein vergleichsweise großer Strom fließen, der dann dazu führt, dass an den Gleichrichtereingangsanschlüssen 20a und 20b eine Gleichrichtereingangsspannung erzeugt wird, die einem ersten Signalpegel entspricht.

In Abhängigkeit von dem Ansteuersignal 62 kann die Darlingtonschaltung 30 auch so angesteuert werden, dass die Gleichrichterausgangsanschlüsse 20c und 20d über die Darlingtonschaltung und damit über den in diesem Fall inaktiven steuerbaren ausgangsseitigen Strompfad 35 nur hochohmig bzw. sehr hochohmig verbunden sind und deshalb kein "Kurzschluss" oder Spannungseinbruch an den Gleichrichterausgangsanschlüssen und damit an den Gleichrichtereingangsanschlüssen stattfindet. Damit bleibt eine an den Gleichrichtereingangsanschlüssen 20a und 20b anliegende Spannung auf einem zweiten Signalpegel, der einem zweiten Zustand einer digitalen Informationsübertragung entspricht.

Handelt es sich beispielsweise bei den Spannungs- oder Signalleitungen 15, die an die Gleichtrichtereingangsanschlüsse 20a und 20c der spannungsfesten Schnittstellenschaltung 100 angeschlossen sind, um ein Digital-Adressierbares-Licht-Schnittstellen (Digital-Addressable-Lighting-Interface = DALI)- Bussystem, wie es im Bereich der Beleuchtungstechnik eingesetzt wird, so kann ein erster Signalpegel einem physikalischen Niedrig (Low)-Pegel mit einem Spannungsbereich von -4,5 V bis +4,5 V entsprechen, wohingegen ein zweiter Signalpegel einem Hoch (High)-Pegel mit einem Spannungsbereich von +9,5 V bis + 22,5 Volt, also z.B. 16 V, oder von -9,5 V und - 22,5V zugeordnet sein kann. Grundsätzlich funktioniert bei einem DALI-Bussystem die Datenübertragung so, dass im Falle eines Sendens eines Bits die Spannung auf einer entsprechenden Datenleitung beispielsweise in Bezug auf eine Referenzdatenleitung auf Null Volt bzw. zumindest näherungsweise auf Null Volt gezogen wird, während im Ruhezustand, also falls kein Bit gesendet wird, eine Spannung auf der entsprechenden Datenleitung im Spannungsintervall von 9,5 bis 22,5 V, also z. B. 16 V bzw. zwischen -9,5 V und -22,5V, anliegt. In einem DALI-Bussystem werden also Daten- und/oder Steuerbefehle durch einen Aktiv-Niedrigpegel (Active-Low)-Übertragung übertragen. Denkbar ist natürlich auch, dass die spannungsfeste Schnittstellenschaltung zusätzlich oder auch alleine für eine Aktiv-Hochpegel (Active High)- Übertragung, wie sie beispielsweise von einer Digital-Seriellen Schnittstelle (Digital-Serial-Interface = DSI) aus der Beleuchtungstechnik bekannt ist, ausgelegt ist.

Gemäß weiteren Ausführungsbeispielen können an die spannungsfeste Schnittstellenschaltung über die Gleichrichtereingangsanschlüsse 20a, 20b auch zusätzliche Tastersignale bzw. Schaltsignale, also einfache Impulssignale oder DSI-Signale, das heißt Signale gemäß einem digitalen Protokoll, gekoppelt werden. Diese Taster- oder Schaltersignale können über das Bussystem 15 übertragen werden, das heißt, es wird ein Taster an die Netzspannung gekoppelt. Sobald der Taster betätigt wird, wird kurzzeitig die Netzspannung an den Schnittstelleneingang, also an die Gleichrichtereingangsanschlüsse 20a, 20b, durchgeschaltet. Die Dauer dieses Anliegens der Netzspannung kann dann von einer Steuereinheit (nicht dargestellt in Fig. 1) ausgewertet werden, wobei zwischen diese Steuereinheit und das Bus- oder Leitungssystem 15 die Schnittstellenschaltung 100 gekoppelt ist.

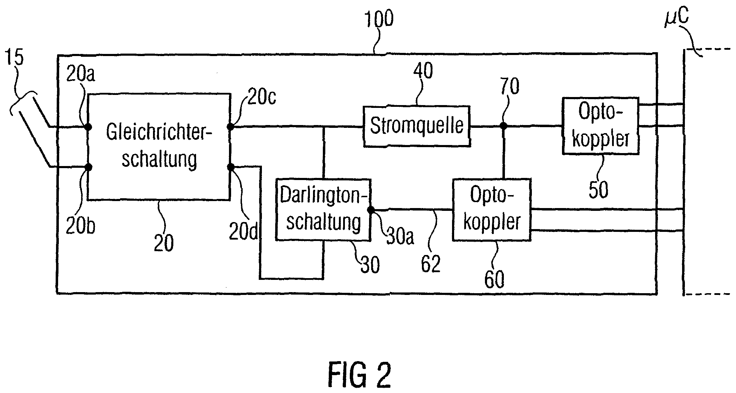

Wie in Fig. 2 in einem weiteren Blockschaltbild dargestellt ist, kann die erfindungsgemäße spannungsfeste Schnittstellenschaltung 100 ferner mehrere weitere optionale Schaltungsanordnungen aufweisen. Neben der bereits im Zusammenhang mit der Fig. 1 beschriebenen Gleichrichterschaltung 20 und der Darlingtonschaltung 30 kann die spannungsfeste Schnittstellenschaltung 100 eine Stromquelle 40, eine Schaltungsanordnung 50 zur galvanischen Trennung, die als Optokoppler ausgebildet sein kann, und einen zweiten Optokoppler 60 aufweisen. Der erste Optokoppler 50 und der zweite Optokoppler 60 können ausgebildet sein, einen bidirektionalen Daten- und/oder Steuersignale zwischen einem Mikroprozessor µC und dem Bussystem 15, zwischen die die spannungsfeste Schnittstelle gekoppelt ist, zu ermöglichen. Beispielsweise kann also der Optokoppler 50 ausgebildet sein, um Informationen, die an dem Bus- oder Leitungssystem 15 anliegen, an den Mikroprozessor µC zu senden. Andererseits werden Daten und Informationen des Mikroprozessors µC mit Hilfe des Optokopplers 60 von der spannungsfesten Schnittstelle empfangen und basierend auf diesen Ansteuersignalen 62 die Informationen an das Bussystem bzw. Leitungssystem 15 übertragen.

Die Stromquelle 40 kann ausgebildet sein, um an einem Ansteueranschluss 30a der Darlingtonschaltung 30 eine eingangsseitige Ansteuerspannung zur Verfügung zu stellen, falls über dem Optokoppler 60 ein Signal in Richtung des Bussystems 15 übertragen werden soll, und damit der Phototransistor auf der Ausgangsseite des Optokopplers 60 beleuchtet ist, so dass der ausgangsseitige steuerbare Strompfad 35 durchgesteuert wird. Daraufhin wird, wie oben bereits im Zusammenhang mit Fig. 1 erläutert wurde, eine Last zwischen den Gleichrichterausgangsanschlüssen 20c und 20d verändert. Wenn es zu einem "Kurzschluss" zwischen den Gleichrichterausgangsanschlüssen 20c und 20d kommt, wird dieser auf die Gleichrichtereingangsanschlüsse 20a und 20b übertragen und die Spannung an auf dem Bussystem bricht zusammen, was einem Low-Pegel in dem Übertragungsprotokoll zwischen an dem Bussystem 15 angeschlossenen Schaltungen und dem Mikroprozessor entsprechen kann. Auf diese Weise können die Daten- und/oder Steuerbefehle an das Bussystem 15 übertragen werden.

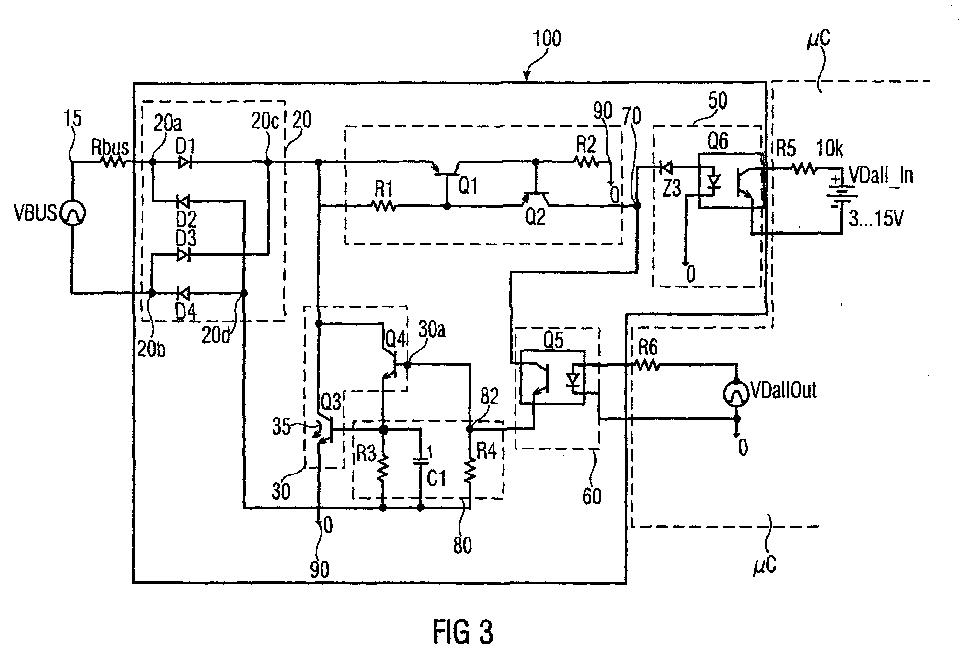

Im Folgenden wird an Hand eines Schaltungsplanes in Fig. 3 ein Ausführungsbeispiel der erfindungsgemäßen spannungsfesten Schnittstellenschaltung detaillierter beschrieben.

Bei der Gleichrichterschaltung 20 kann es sich beispielsweise um vier Dioden D1 bis D4, die in einer Grätzschaltungsanordnung verschaltet sind, handeln. An die Gleichrichtereingangsanschlüsse 20a und 20b kann ein Bussystem 15 koppelbar sein. Bei dem Bussystem 15 kann es sich beispielsweise um ein DALI-Bussystem handeln. Wie oben bereits beschrieben, kann in einem Ruhezustand des Bussystems eine Gleichrichtereingangsspannung, welche einem High-Pegel im DALI-System entspricht, an den Gleichrichtereingangsanschlüssen 20a und 20b anliegen. Dementsprechend wird dann eine gleichgerichtete Gleichrichterausgangsspannung an den Anschlüssen 20c und 20d des Gleichrichters 20 bereitgestellt. Zwischen den Gleichtrichterausgangsanschlüssen 20c und 20d kann nun die Darlingtonschaltung 30 mit ihren mindestens zwei Transistoren Q3 und Q4 gekoppelt sein, so dass ein ausgangsseitiger steuerbarer Strompfad 35 der Darlingtonschaltung, die als Stromverstärkungsschaltung wirkt, zwischen den Gleichrichterausgangsanschlüssen gekoppelt ist. In diesem Ausführungsbeispiel sind die Transistoren Q3 und Q4 als npn-Bipolartransistoren ausgebildet. Der eingangsseitige Bipolartransistor Q4 ist in diesem Ausführungsbeispiel mit seinem Kollektoranschluss an dem Gleichrichterausgangsanschluss 20c gekoppelt und mit seinem Emitteranschluss an die Basis des ausgangsseitigen Transistors Q3. Die entsprechende Basis zur Steuerung des Bipolartransistors Q4 ist über einen Knoten 82 mit einem Widerstand R4 der Ansteuerschaltung 80, der einen Widerstandswert von 10 kΩ aufweist und mit seinem zweiten Anschluss an ein Massepotential 90 geschlossen ist, und dem Optokoppler Q5 verbunden. Über den Optokoppler Q5 und der Ansteuerschaltung kann dann ein Ansteuersignal 62 an den Basis- bzw. Steueranschluss des Transistors Q4 angelegt werden. Der ausgangsseitige Transistor Q3 ist mit seiner Basis zum einen über ein RC-Glied der Ansteuerschaltung 80 mit dem Massepotential 90 verbunden und zum anderen mit dem Emitteranschluss des Transistors Q4. Der steuerbare ausgangseitige Strompfad 35, also der steuerbare Strompfad zwischen Kollektor und Emitter des Transistors Q3, ist zwischen den Gleichrichterausgangsanschlüssen 20c und 20d gekoppelt. Dabei ist der Kollektoranschluss des Bipolartransistors Q3 an den Gleichrichterausgangsanschluss 20c gekoppelt und der Emitteranschluss an den Gleichrichterausgangsanschluss 20d. Sowohl der Gleichrichterausgangsanschluss 20d, als auch der Emitteranschluss des Transistors Q3 liegen beide auf einem Bezugspotential, das im vorliegenden Ausführungsbeispiel das Massepotential 90 sein kann. In weiteren Ausführungsbeispielen der vorliegenden Erfindung kann die Darlingtonschaltung 30 auch mehr als zwei Bipolartransistoren aufweisen. Außerdem kann es sich bei den Transistoren beispielsweise auch um Feldeffekttransistoren, wie z.B. MOS-FET Transistoren, handeln.

Die Darlingtonschaltung 30 wird in diesem Ausführungsbeispiel über eine Ansteuerschaltungsanordnung 60, 80 angesteuert. Die Ansteuerschaltungsanordnung 80 weist einen Widerstand R4 mit einem Widerstandswert von einigen kΩ auf, der zwischen einen Ansteueranschluss der Darlingtonschaltung 30, also beispielsweise dem Basisanschluss des eingangsseitigen Bipolartransistor Q4 der Darlingtonschaltung und einem Bezugspotentialleiter 90 geschaltet ist, wobei der Bezugspotentialleiter mit einem bezugspotentialseitigen Anschluss des steuerbaren ausgangseitigen Strompfades 35 gekoppelt sein kann. Bei dem Bezugspotential kann es sich beispielsweise um das Massepotential 90 handeln. Der Widerstand R4 ist ausgebildet ist, um im Ruhezustand, also wenn kein Ansteuersignal 62 anliegt und damit kein Bit an das Bussystem 15 gesendet werden soll, einen Knoten 82 in Richtung eine Massepotentials 90 zu ziehen. Ferner weist die Ansteuerschaltungsanordnung 80 das bereits oben erwähnte RC-Glied auf, welches aus einem Widerstand R3 mit einem Widerstandswert im kΩ Bereich und einen Kondensator C1 mit einer Kapazität von weniger als 1µF besteht, auf. Das RC-Glied ist an einem Anschluss mit der Basis des Transistors Q3 und dem Emitteranschluss des Transistors Q4 verbunden und über seinen zweiten Anschluss an das Bezugspotential, also beispielsweise an das Massepotential 90 gekoppelt. Um nun die Spannungsfestigkeit der Schnittstellenschaltung 100 im Vergleich zu den nach dem Stand der Technik verwendeten Thyristoren (siehe Bild 7) zu verbessern, kann es sich bei den mindestens zwei Transistoren Q3 und Q4 der Darlingtonschaltung um spannungsfeste Transistoren handeln. Beispielsweise können die mindestens zwei Transistoren in der Darlingtonschaltung eine Spannungsfestigkeit von zumindest 100 Volt, zumindest 600 Volt oder zumindest 1000 Volt aufweisen. Für die Bipolartransistoren Q3 und Q4 kann beispielsweise eine Kollektor-Emitter-Spannungsfestigkeit von zumindest 100 Volt, zumindest 600 Volt oder zumindest 1000 Volt gegeben sein.

Gemäß einem Ausführungsbeispiel kann die Darlingtonschaltung 30 spannungsfeste Transistoren mit einer Spannungsfestigkeit größer 600V umfassen. Die Transistoren der Darlingtonschaltung sind bevorzugt so gewählt, dass eine Stromverstärkung der Darlingtonschaltung größer 1500 oder größer 2000 ist, wobei beim Durchschalten der Darlingtonschaltung ein Kollektorstrom in einem Bereich von 1 mA bis 300 mA in dem ausgangseitigen steuerbaren Strompfad 35 verfügbar ist. Beispielsweise kann der Transistor Q3 vorteilhafterweise eine Stromverstärkung größer 80 in einem Kollektorstrombereich von 1 mA bis 300 mA aufweisen. Der Treibertransistor Q4 in der Darlingtonschaltung 30 kann einen Strombereich für die Stromverstärkung von beispielsweise 1 mA bis 4 mA aufweisen. Um eine Spannung für einen Low-Pegel in einem DALI-Bussystem im zulässigen Bereich der Schnittstellenspannung für einen Low-Pegel von ±4,5V zu halten, kann es zusätzlich nötig sein den Widerstand R2 der Stromquelle 40 im Eingangskanal der spannungsfesten Schnittstelleschaltung, im Gegensatz zu dem Widerstand R34 der bisherigen Schaltung mit Thyristor (Fig.7), auf Masse zu legen.

In einem Ausführungsbeispiel können also die Bipolartransistoren Q4 und Q3 zusammen eine zumindest 1500-fache oder zumindest 2000-fache Stromverstärkung aufweisen, so dass in einem durchgesteuerten Zustand der Darlingtonschaltung in dem ausgangsseitigen steuerbaren Strompfad ein Strom zwischen 1 mA und 300 mA verfügbar ist.

Vorteilhafter Weise kann in der erfindungsgemäßen spannungsfesten Schnittstellenschaltung an einem oder an mehreren Transistorbasisanschlüssen oder Steueranschlüssen der Transistoren der Darlingtonschaltung 30 ferner ein oder mehrere Kondensatoren geschaltet sein. Diese Kondensatoren können zwischen den Basisanschlüssen und beispielsweise einem Massepotential 90 gekoppelt sein und ein Durchsteuern der jeweiligen Transistoren in Folge eines Spannungspulses über die jeweiligen Miller-Kapazitäten, also der Kapazität zwischen dem Kollektoranschluss und dem Basisanschluss, verhindern. Beispielsweise kann also der Kondensator C1 der Ansteuerschaltung 80 zwischen dem Basisanschluss des ausgangseitigen Transistors, also z.B. dem Bipolartransistor Q3, und einem Bezugspotential, wie dem Massepotential 90, geschaltet sein. Alternativ oder zusätzlich kann auch ein zweiter Kondensator zwischen dem Basisanschluss des eingangsseitigen Transistors also z.B. dem Bipolartransistor Q4 und einem entsprechenden Bezugspotential geschaltet sein.

Durch diesen Kondensator C1 kann dann die Spannungsfestigkeit der spannungsfesten Schnittstellenschaltung wesentlich verbessert werden. In dem Ausführungsbeispiel in Fig. 3 ist beispielsweise der Kondensator C1 zwischen die Transistorbasis des Bipolartransistors Q3 und dem Massepotential 90 gekoppelt. Der Kondensator C1 weist in diesem Ausführungsbeispiel einen Kapazitätswert von unter 1 µF auf, der relativ groß gegenüber einer typischen Miller-Kapazität eines Bipolartransistors, welche im Pico-Farad Bereich liegt, ist.

Allgemein kann der Kapazitätswert eines solchen Kondensators, z.B des Kondensators C1 auf die Miller-Kapazität des angeschlossenen Transistors und die gewünschte Spannungsfestigkeit der Schnittstellenschaltung 100 abgestimmt sein. Die Kapazität eines Kondensators zur Erhöhung der Spannungsfestigkeit kann beispielsweise mindestens 100-mal oder 200-mal so groß sein, wie die Miller-Kapazität eines Transistors der Darlingtonschaltung, mit dem der Kondensator zur Erhöhung der Spannungsfestigkeit gekoppelt ist. Beispielsweise kann eine Kapazität des Kondensators der mit einer Basis bzw. einem Steueranschluss eines Transistors der Darlingtonschaltung verbunden ist, so gewählt sein, dass ein Spannungspuls von 500 V, von 1000 V, von 2000 V oder sogar von einer höheren Spannung über den ausgangsseitigen steuerbaren Strompfad 35 bei einem inaktiven Ansteuersignal an der Darlingtonschaltung nicht zu einem Durchsteuern des ausgangsseitigen steuerbaren Strompfades 35 führt. Bei Anliegen einer entsprechend dimensionierten Kapazität an einem Basis- oder Steueranschluss eines Transistors der Darlingtonschaltung kann das Durchsteuern des ausgangsseitigen steuerbaren Strompfades verhindert wird. Die spannungsfeste Schnittstellenschaltung 100 kann also in Ausführungsbeispielen ferner zumindest einen Kondensator C1 aufweisen, der mit einem Steueranschluss eines Transistors Q3 und/oder Q4 der Darlingtonschaltung 30 gekoppelt ist, und der ausgelegt ist, um einer Änderung in einem gesteuerten Strompfad des entsprechenden Transistors Q3 und/oder Q4 entgegenzuwirken.

Vorteilhafterweise gibt es bei dem Einsatz einer Darlingtonschaltung im Vergleich zu einer Schnittstellenschaltung mit Thyristor nicht den für Thyristoren typischen Kippeffekt, der dazu führt, dass nach dem "Zünden" des Thyristor ein Abschalten des Thyristors schwerer zu handhaben ist.

Die spannungsfeste Schnittstellenschaltung 100 kann ferner eine Stromquelle 40 aufweisen, die zwischen den ersten Gleichrichterausgangsanschluss 20c und einem Knoten 70 gekoppelt ist. Die Stromquelle 40 weist zwei pnp-Bipolartransistoren Q1 und Q2 auf, sowie einen ersten Widerstand R1 mit einem Widerstandswert einigen hundert Ω und einen zweiten Widerstand R2 mit einem Widerstandswert von ca. hundert kΩ. Der Bipolartransistor Q1 kann als Regelungstransistor für den Bipolartransistor Q2 wirken, da er über seinen steuerbaren Strompfad mit dem Basisanschluss des Transistors Q2 gekoppelt ist. Der Emitteranschluss des Transistors Q1 und der Widerstand R1 sind an den Gleichrichterausgangsanschluss 20c angeschlossen und ein Basisanschluss des Transistors Q1 ist zwischen dem weiteren Anschluss des Widerstandes R1 und dem Emitteranschluss des Transistors Q2 geschaltet. Der Kollektoranschluss des Transistors Q1 ist zum einen an den Basisanschluss des Transistors Q2 gekoppelt und zum anderen über den Widerstand R2 mit einem Bezugspotential, wie z.B. dem Massepotential 90. Der Widerstand R2 ist zwischen einem Bezugspotential, wie z.B. dem Massepotential 90, und dem Basisanschluss des Transistors Q2 geschaltet. Der Kollektoranschluss des Transistors Q2 ist über den Knoten 70 mit der Schaltanordnung zur Spannungsbegrenzung 50 und mit dem Optokoppler 60 verbunden.

Dar der zweite Widerstand R2 dabei an das Massepotential 90 angeschlossen ist, kann ein Basisstrom des Transistors Q2 bei kleinen Eingangsspannungen, die einem Low-Pegel entsprechen können, an der spannungsfesten Schnittstellenschaltung 100, wegen der um die Zenerdiode Z3 und der Optokopplerspannung der Schaltungsanordnung 50 erhöhten Spannung an dem Widerstand R2, entscheidend erhöht werden. Die Schalteranordnung 50 weist in diesem Ausführungsbeispiel nämlich einen Optokoppler Q6 und eine in Sperrrichtung betriebene Zenerdiode Z3 auf, die mit ihrem kathodenseitigen Anschluss mit dem Kollektoranschluss des Transistors Q2 verbunden ist. Der Anodenanschluss der Zenerdiode Z3 ist hingegen an einen Anodenanschluss einer Leuchtdiode des Optokopplers geschaltet und der entsprechende Kathodenanschluss der Leuchtdiode an das Bezugs- bzw. Massepotential 90 gelegt.

Wie in Fig. 3 dargestellt ist, kann die Stromquelle 40 zwischen dem ersten Gleichrichterausgangsanschluss 20c und einem Ansteueranschluss 30a der Darlingtonschaltung 30 gekoppelt sein. Dieser Ansteueranschluss 30a kann beispielsweise der Basis- oder der Steueranschluss des Transistors Q4 sein.

Im vorliegenden Ausführungsbeispiel ist zwischen die Stromquelle 40 und die Darlingtonschaltung 30 ferner der Optokoppler 60 gekoppelt. Liegt nun beispielsweise am Eingang der spannungsfesten Schnittstellschaltung ein Active-Low-Signal eines DALI-Protokolls an, das heißt, ein Spannungspegel zwischen -4,5 V und +4,5 V, so sollte ein Strom über den Transistor Q2 der Stromquelle 40 und dem Optokoppler Q5, der auf ein Ansteuersignal von einem Mikroprozessor durchgesteuert sein kann, größer als 150 pA sein, damit der ausgangsseitige durchsteuerbare Strompfad 35 des Transistors Q3 der Darlingtonschaltung 30 ungefähr 250 mA Strom ziehen kann. Dadurch kann sichergestellt werden, dass ein von dem Mikroprozessor gesendetes Bit über die Gleichrichterschaltung 20 an das Bussystem 15 übertragen werden kann.

Die Schalteranordnung 50 weist in diesem Ausführungsbeispiel einen Optokoppler Q6 und die Zenerdiode Z3 auf, die ist über den Knoten 70 mit der Stromquelle 40 und dem Optokoppler Q5 verbunden sind. Der Optokoppler Q6 dient dazu, Daten oder Steuersignale, die an den Gleichrichtereingangsanschlüssen 20a, 20b anliegen, an eine entsprechende Steuereinheit oder einen Mikroprozessor zu übertragen. Eine Leuchtdiode (LED) eines Optokopplers kann dazu ausgebildet sein, um basierend auf den an den Gleichrichtereingangsanschlüssen 20a, 20b anliegenden Signalen einen Photoempfänger, wie z.B. einen Phototransistor oder eine Photodiode, des Optokopplers anzuregen. Die Steuereinheit bzw. der Mikroprozessor kann ausgebildet sein, um nach einem DALI-Protokoll Daten- und/oder Steuersignale bidirektional über die spannungsfeste Schnittstellenschaltung 100 zu senden und zu empfangen.

Durch die Schaltungsanordnung 50 mit dem Optokoppler Q6, der eine Leuchtdiode (LED) aufweist, und der in Sperrrichtung geschalteten Zenerdiode Z3 kann eine Spannungsbegrenzung im Knoten 70 erreicht werden. Dies wird durch den definierten Spannungsabfall an der Zenerdiode und der LED erreicht. Damit kann dann auch, falls der Optokoppler Q5 durchgeschaltet ist, eine definierte Ansteuerspannung an dem Ansteueranschluss 30a der Darlingtonschaltung, nämlich dem Basis- bzw. dem Steueranschluss des Transistors Q4, erzielt werden. Die Basis von dem Transistor Q4 der Darlingtonschaltung ist also bezüglich einem Spannungspuls über den Eingangskanal, das heißt, über die Stromquelle 40 und die Schaltungsanordnung 50, geschützt.

Der Optokoppler Q6 kann ausgebildet sein, um, wie in dem Schaltplan in der Fig. 3 dargestellt ist, Daten- und/oder Steuerbefehle gemäß einem DALI-Protokoll an einen nachfolgenden Mikroprozessor µC, der beispielsweise in einem Vorschaltgerät für Leuchtmittel integriert sein kann, zu übertragen. Der Optokoppler Q5 kann im Gegenzug so ausgebildet sein, um ein Ansteuersignal 62 von einem Mikroprozessor µC eines Vorschaltgerätes zu empfangen und daraufhin eine entsprechende digitale Information mit Hilfe der Darlingtonschaltung an den Gleichrichtereingangsanschlüssen 20a, 20b zur Verfügung zu stellen. Diese digitalen Informationen können dann über ein Bus- oder Leitungssystem 15 beispielsweise an eine zentrale Steuereinheit eines Beleuchtungssystems weitergegeben werden.

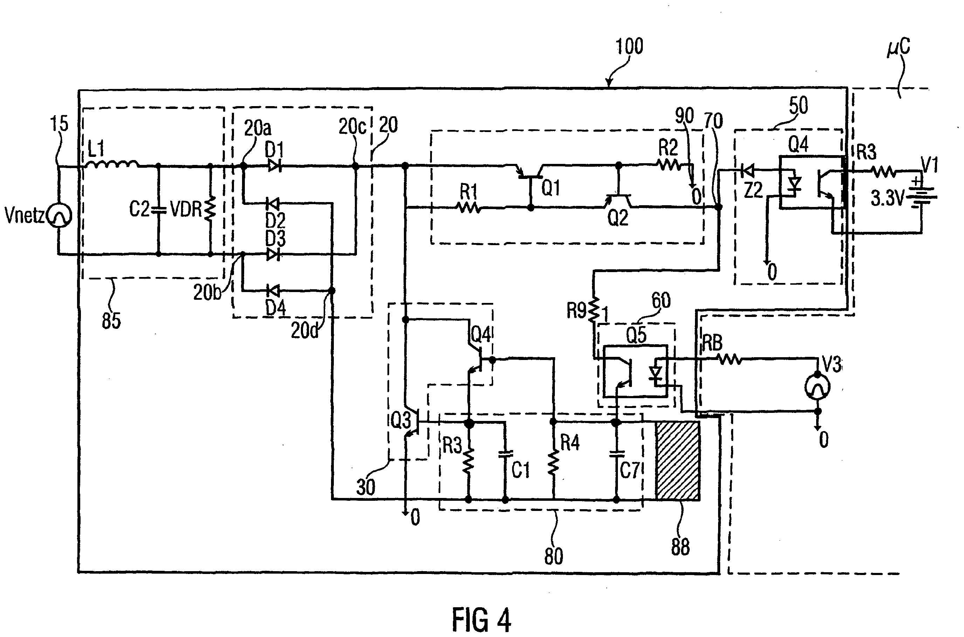

In Fig. 4 ist der Schaltplan einer spannungsfesten Schnittstellenschaltung 100 gemäß einem weiteren Ausführungsbeispiel dargestellt. Die spannungsfeste Schnittstellenschaltung 100 weist wiederum eine Gleichrichterschaltung 20, eine Stromquelle 40, eine Empfangsschaltungsanordnung 50, eine Darlingtonschaltung 30, sowie einen Optokoppler Q5 auf, wie sie bereits im Zusammenhang mit der Fig. 3 beschrieben wurden, weshalb diese an dieser Stelle nicht noch einmal erläutert werden. Wie in Fig. 4 weiter dargestellt ist, kann den Gleichrichtereingangsanschlüssen 20a und 20b der spannungsfesten Schnittstellenschaltung 100 ein Filter 85 vorgeschaltet sein. Der Zweck des Filters ist, wie oben bereits erläutert, die Filterung bzw. die Dämpfung von Spannungspulsen, wie z. B. den oben erwähnten Burst- oder Surgepulsen. Die spannungsfeste Schnittstellenschaltung 100 kann also in diesem Ausführungsbeispiel ferner ein Filter umfassen, das unerwünschte Spannungspulse filtert bzw. dämpft. Das Filter 85 besteht in diesem Ausführungsbeispiel aus einer Induktivität L1 mit einem Induktivitätswert von 10 µH, einem Kondensator C2 mit einer Kapazität von einigen Hundert pF und einem 300V Varistor VDR. Der Kondensator C2 und der Varistor VDR sind dabei als RC-Glied zwischen die Gleichrichtereingangsanschlüsse 20a und 20b geschaltet, während die Induktivität L1 in Serie zu dem RC-Glied und dem Gleichrichtereingangsanschluss 20a gekoppelt ist.

Das Filter 85 kann so dimensioniert sein, dass beispielsweise Burstpulse bis auf eine Spannungserhöhung von einigen 10 Volt eliminiert werden. Problematischer kann dies hingegen bei den energiereichen Surgepulsen sein, bei denen die Spannungserhöhung durch das Filter nicht so stark eliminiert wird. Surgepulse werden zwar durch das Filter mit dem Varistor VDR in der Spannungsamplitude stark reduziert, aber dennoch kann ein Surgespannungspuls von beispielsweise 2 kV trotz Filter 85 noch mit einer Amplitude von beispielsweise bis zu einem kV an die Gleichtrichtereingangsanschlüsse der Schnittstellenschaltung gelangen. Wie oben bereits erwähnt wurde, würde nun durch die steile Flanke solch eines Surgepulses eine Schnittstellenschaltung mit Thyristor nach dem Stand der Technik ganz oder teilweise durchschalten, da es sich bei dem Thyristor um ein mitgekoppeltes Element handelt. Dies kann zur Zerstörung der Schaltung führen.

Durch die erfindungsgemäße Verwendung der Darlingtonschaltung mit spannungsfesten Transistoren in einer Schnittstellenschaltung 100 und durch die Verwendung mindestens eines Kondensators, der zwischen einen Basisanschluss bzw. einen Steueranschluss eines Transistors der Darlingtonschaltung und einem Bezugspotential 90 gekoppelt ist, können im Vergleich zu Schnittstellenschaltungen mit Thyristorschaltungen viel höhere Spannungspulse angelegt werden, ohne dass die Schaltung zerstört wird. So kann beispielsweise eine Schnittstellenschaltung mit Thyristorschaltung, wie sie im Zusammenhang mit Fig. 7 beschrieben wurde, schon bei einem Surgepuls von 500 V zerstört werden, während, wie in Tests gezeigt wurde, die spannungsfeste Schnittstellenschaltung 100 mit Darlingtonschaltung Spannungspulsen, also z. B. Surgespannungen von über 2 kV standhalten kann, ohne dass die Schaltung zerstört wird. Zudem ist der Einsatz von 300 V Varistoren VDR an Stelle von 275 V Varistoren in Schnittstellenschaltungen mit Thyristorschaltung schlecht möglich, da eine Spannung durch die Verwendung eines 300 V Varistors VDR in dem Filter am Thyristor dementsprechend erhöht werden würde, weshalb in einer Thyristorschaltung im Gegensatz zu der erfindungsgemäßen spannungsfesten Schnittstellenschaltung typischerweise nur 275 V Varistoren VDR eingesetzt werden können. Das heißt jedoch, dass vorteilhafterweise mit der erfindungsgemäßen spannungsfesten Schnittstellenschaltung Varistoren VDR größer 275 V in dem Filter 85 verwendet werden können.

Typischerweise werden an einem Netzeingang eines elektrischen Vorschaltgerätes für Leuchtmittel 300V Varistoren eingesetzt. Aus den obigen Ausführungen ist klar, dass diese 300V Varistoren vorteilhafterweise nun auch für das Filter einer spannungsfesten Schnittstellenschaltung in dem elektrischen Vorschaltgerät eingesetzt werden kann. Dadurch ergeben sich Kostenvorteile beim Einkauf der Varistoren und der Herstellung der Vorschaltgeräte mit der Schnittstellenschaltung, sowie eine vereinfachte und schnellere Bestückung der Vorschaltgeräte in der Produktion, da keine zwei unterschiedlichen Varistorentypen verwendet werden müssen.

In dem in Fig. 4 dargestellten Ausführungsbeispiel weist die Ansteuereinrichtung 80 neben dem Kondensator C1, der einen Kapazitätswert von einigen nF aufweist, und dem Widerstand R3 mit einem Widerstandswert im kΩ-Bereich, ferner einen zweiten Kondensator C7 mit einem Widerstandswert von einigen nF und einem zweiten Widerstand R4 mit einem Widerstandswert im kΩ Bereich auf. Der Kondensator C1 und der Widerstand R3 sind parallel zwischen der Basis bzw. dem Steueranschluss des Transistors Q3 und einer Bezugspotentialleitung bzw. einem Massepotential 90 angeordnet. Der Kondensator C7 und der Widerstand R4 sind in diesem Ausführungsbeispiel zusätzlich an die Basis bzw. den Steueranschluss des zweiten Transistors Q4 der Darlingtonschaltung 30 angeschlossen und zwar bevorzugt in einer Parallelschaltung zwischen dem Basisanschluss des Transistors Q4 und einer Bezugspotentialleitung, die auf einem Massepotential 90 liegen kann. In diesen Ausführungsbeispielen wird also an jede Transistorbasis der Darlingtonschaltung eine Kapazität geschaltet, die ein Durchsteuern des jeweiligen Transistors in Folge eines Spannungspulses über ihre entsprechenden Kollektor-Basiskapazitäten bzw. ihren Miller-Kapazitäten verhindern soll. Durch das Verschalten der entsprechenden Transistorbasisanschlüsse der zwei Transistoren der Darlingtonschaltung mit einem oder mehreren Kondensatoren kann, wie oben bereits näher erläutert wurde, einem Durchsteuern des ausgangsseitigen steuerbaren Strompfades 35 und damit einer möglichen Zerstörung bei Überspannung entgegengewirkt werden.

Wie in dem Blockschaltbild in Fig. 4 dargestellt ist kann die spannungsfeste Schnittstellenschaltung ferner eine Schaltungsanordnung 88 zur Einstellung einer Flankensteilheit der auf das Bussystem 15 zu übertragenden Signale aufweisen.

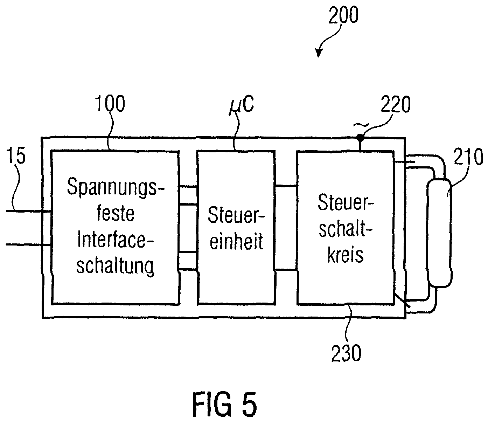

In Fig. 5 ist nun schematisch ein Ausführungsbeispiel für eine Anwendung der erfindungsgemäßen spannungsfesten Schnittstellenschaltung 100 dargestellt. Gemäß einem Ausführungsbeispiel kann ein elektrisches Vorschaltgerät 200 für Leuchtmittel 210 eine im Zusammenhang mit den Fig. 1 bis 4 beschriebene spannungsfeste Schnittstellenschaltung 100 aufweisen. Bei dem durch das Vorschaltgerät gesteuerte Leuchtmittel kann es sich beispielsweise um eine Glühlampe oder eine Gasentladungslampe handeln. Das Vorschaltgerät 200 kann ferner eine Steuereinheit bzw. einen Mikroprozessor oder Mikrocontroller aufweisen, der ausgebildet ist, den Betriebszustand des Leuchtmittels 210 über einen Steuerschaltkreis zu steuern. Solch ein Betriebszustand kann beispielsweise ein bestimmter einzustellender Helligkeitswert des Leuchtmittels 210 sein. Das Vorschaltgerät kann über einen eigenen Spannungsversorgungsanschluss 220 verfügen. Das Leuchtmittel kann also beispielsweise bei 220V betrieben werden, während das oben erwähnte Bussystem 15 bei einer Spannung in einem Bereich von - 22,5V bis+22,5V betrieben werden kann. Die Einstellung eines bestimmten Betriebszustandes kann durch einen Steuerbefehl veranlasst werden. Dieser Steuerbefehl kann von dem Bussystem 15 über die spannungsfeste Schnittstellenschaltung 100 an die Steuereinheit µC, die dann die entsprechende Ansteuerung eines Steuerschaltkreises 230 übernimmt, übertragen werden. Beispielsweise kann also von einer zentralen Steuereinheit oder einem Taster bzw. einem Sensor, die an das Bussystem 15 angeschlossen sind, ein Steuerbefehl zum Einstellen eines bestimmten Helligkeitswertes über die spannungsfeste Schnittstellenschaltung an die Steuereinheit µC des Vorschaltgerätes 200 weitergegeben werden. Diese kann dann beispielweise veranlassen, dass durch eine Änderung einer Frequenz und/oder eines Tastverhältnisses eine von einem Wechselrichter gelieferte getaktete Wechselspannung für das Leuchtmittel 210 im Steuerschaltkreis 230 so verändert wird, dass der gewünschte Helligkeitswert eingestellt wird. Bei dem Leitungs- bzw. Bussystem 15 kann es sich um das DALI-Bussystem handeln, in dem Daten und/oder Steuerbefehle gemäß einem DALI-Protokoll übertragen werden. Die Steuereinheit bzw. der Mikrocontroller µC kann so ausgebildet sein, dass er anhand der Signalstruktur der Signale, die ihm über die spannungsfeste Schnittstellenschaltung 100 zugeführt werden erkennen kann, ob es sich beispielsweise um Tastersignale, das heißt, einfache Impulssignale oder beispielsweise auch um Digital-Serial-Schnittstelle (DSI)-Signale, das heißt, Signale gemäß einem bestimmten digitalen Protokoll, handelt. Abhängig von der Art der Daten bzw. Steuerbefehle können diese dann unterschiedlich verarbeitet werden.

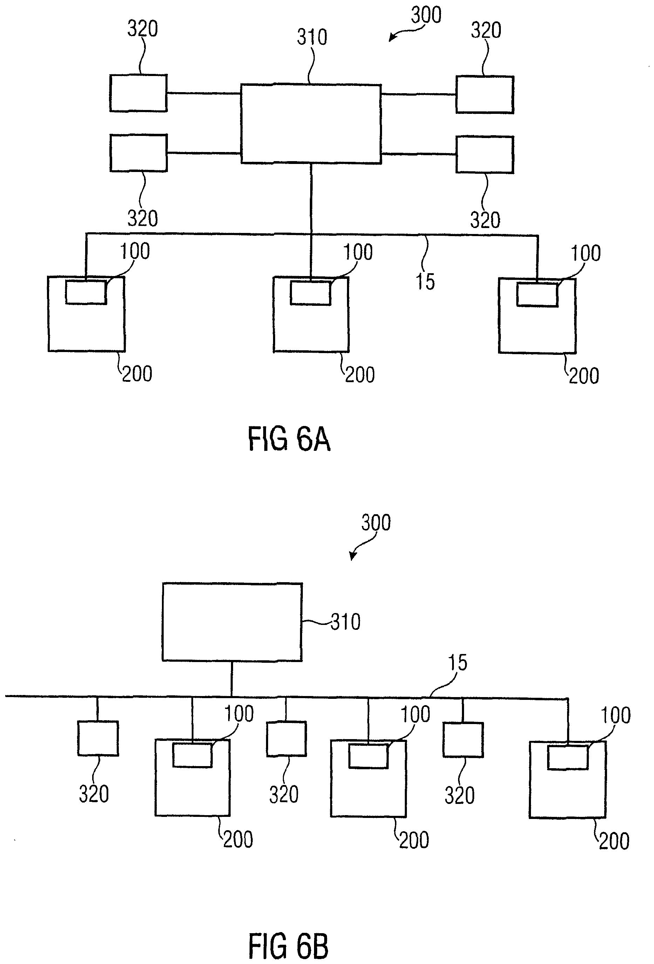

Wie in den Fig. 6a-b schematisch dargestellt ist, umfasst die Erfindung allgemein auch ein Beleuchtungssystem 300 zur Steuerung von Leuchtmitteln mit einer zentralen Steuereinheit 310, welche ausgebildet ist, einen Betriebszustand eines Leuchtmittels einzustellen oder abzufragen. Ferner weist das Beleuchtungssystem 300 zumindest ein Vorschaltgerät 200 für Leuchtmittel auf, wobei das Vorschaltgerät eine spannungsfeste Schnittstellenschaltung 100, wie sie im Zusammenhang mit den Fig. 1 bis 5 beschrieben wurde, aufweist. Die zentrale Steuereinheit 310 und das elektrische Vorschaltgerät 200 können über das Bussystem 15 zur Übertragung von Daten- und/oder Steuersignalen elektrisch miteinander gekoppelt sein. Das Bussystem kann, wie im Zusammenhang mit den Fig. 1 bis 5 beschrieben ist, an die Schnittstellenschaltung 100 elektrisch gekoppelt sein. Bei dem Bussystem 15 kann es sich beispielsweise um ein DALI-Bussystem handeln, auf dem Daten- und/oder Steuersignale gemäß einem DALI-Protokoll zwischen der zentralen Steuereinheit 310 und dem Vorschaltgerät übertragen werden können. Denkbar ist jedoch auch, dass es sich um ein anderes Bussystem handelt. Die Übertragung kann bidirektional erfolgen, weshalb die spannungsfeste Schnittstellenschaltung 100 ausgebildet sein kann, entsprechende Daten- und/oder Steuersignale bidirektional zwischen einem Vorschaltgerät und der zentralen Steuereinheit 310 zu übertragen.

Gemäß einigen Ausführungsbeispielen können auch andere Elemente zur Steuerung eines Betriebszustandes eines Leuchtmittels an das Bussystem angeschlossen sein. Dabei kann es sich beispielsweise um Schalter, Kontrolltafeln, Taster, Sensoren usw. handeln. Wie in Fig. 6a dargestellt ist, können dabei Sensoren und Bedienelemente 320 über separate Verbindungen direkt an die zentrale Steuereinheit 310 angebunden sein oder aber die Sensoren und Bedienelemente 320 können über das DALI-Bussystem 15 an die zentrale Steuereinheit 310 und die Vorschaltgeräte 200 angeschlossen sein, wie in der Fig. 6b schematisch dargestellt ist.

## Patentansprüche

1. Spannungsfeste Beleuchtungssystem-Schnittstellenschaltung (100), mit folgenden Merkmalen:
einer Gleichrichterschaltung (20), die ausgebildet ist, um in Abhängigkeit von einer an Gleichrichtereingangsanschlüssen (20a, 20b) anliegenden Gleichrichtereingangsspannung an Gleichrichterausgangsanschlüssen (20c, 20d) eine gleichgerichtete Gleichrichterausgangsspannung bereitzustellen, **dadurch gekennzeichnet dass** einer Darlingtonschaltung (30) mit zumindest zwei Transistoren (Q3, Q4),
wobei die Darlingtonschaltung einen in Abhängigkeit von einem Ansteuersignal (62) steuerbaren ausgangsseitigen Strompfad (35) aufweist,
wobei der steuerbare ausgangsseitige Strompfad (35) zwischen die Gleichrichterausgangsanschlüsse (20c, 20d) gekoppelt ist,
wobei der ausgangsseitige steuerbare Strompfad (35) ausgebildet ist, um zwischen den Gleichrichterausgangsanschlüssen (20c, 20d) eine in Abhängigkeit von einem Ansteuersignal (62) veränderbare Last zu bilden.

2. Spannungsfeste Beleuchtungssystem-Schnittstellenschaltung (100) gemäß Anspruch 1, wobei die spannungsfeste Schnittstellenschaltung ferner einen Kondensator (C1, C7) aufweist, der mit einem Steueranschluss eines Transistors (Q3, Q4) der Darlingtonschaltung (30) gekoppelt ist, und der ausgelegt ist, um einer Änderung eines Stroms in einem Strompfad des entsprechenden Transistors (Q3, Q4) entgegenzuwirken.

3. Spannungsfeste Beleuchtungssystem-Schnittstellenschaltung (100) gemäß Anspruch 2, wobei der Kondensator (C1, C7) eine Kapazität aufweist, die mindestens 100-mal so groß wie eine Miller-Kapazität des Transistors ist, an dessen Steueranschluss der Kondensator (C1, C4) gekoppelt ist.

4. Spannungsfeste Beleuchtungssystem-Schnittstellenschaltung (100) gemäß Anspruch 2 oder 3, wobei ein Kapazitätswert des Kondensators (C1, C7) so gewählt ist, dass ein Spannungspuls von 1000 Volt über dem steuerbaren ausgangsseitigen Strompfad (35) bei inaktiven Ansteuersignal (62) nicht zu einem Durchsteuern des steuerbaren ausgangsseitigen Strompfades (35) führt.

5. Spannungsfeste Beleuchtungssystem-Schnittstellenschaltung (100) gemäß einem der vorhergehenden Ansprüche, die ferner einen zweiten Kondensator (C1, C7) aufweist, der mit einem Steueranschluss eines zweiten Transistors (Q3, Q4) der Darlingtonschaltung (30) gekoppelt ist, und der ausgelegt ist, um einer Änderung eines Stroms in einem Strompfad des zweiten Transistors (Q3, Q4) entgegenzuwirken.

6. Spannungsfeste Beleuchtungssystem-Schnittstellenschaltung (100) gemäß einem der vorhergehenden Ansprüche, bei der die Darlingtonschaltung (30) Bipolartransistoren (Q3, Q4) aufweist, die eine Kollektor-Emitter-Spannungsfestigkeit von zumindest 500 V, zumindest 600 V oder zumindest 1000 V aufweisen.

7. Spannungsfeste Beleuchtungssystem-Schnittstellenschaltung (100) gemäß einem der vorhergehenden Ansprüche, wobei die Darlingtonschaltung (30) eine zumindest 1500-fache Stromverstärkung aufweist, so dass in einem durchgesteuerten Zustand der Darlingtonschaltung (30) in dem ausgangsseitigen steuerbaren Strompfad (35) ein Strom zwischen 1 mA und 300 mA verfügbar ist.

8. Spannungsfeste Beleuchtungssystem-Schnittstellenschaltung (100) gemäß einem der vorhergehenden Ansprüche, die ferner eine Stromquelle (40) aufweist, die zwischen einem ersten Gleichrichterausgangsanschluss (20c) und einem Ansteueranschluss (30a) der Darlingtonschaltung (30) gekoppelt ist, wobei die Stromquelle ausgelegt ist, um einen Ansteuerstrom der Darlingtonschaltung zu begrenzen.

9. Spannungsfeste Beleuchtungssystem-Schnittstellenschaltung (100) gemäß Anspruch 8, die ferner einen Knoten (70) aufweist, der elektrisch zwischen der Stromquelle (40), dem Ansteueranschluss (30a) der Darlingtonschaltung (30) und einer Schaltungsanordnung (50) zur Spannungsbegrenzung gekoppelt ist.

10. Spannungsfeste Beleuchtungssystem-Schnittstellenschaltung (100) gemäß Anspruch 9, wobei der Knoten ferner mit einem Optokoppler (Q5) zum Empfang des Ansteuersignals (62) gekoppelt ist und wobei der Optokoppler (Q5) mit einem Ansteueranschluss (30a) der Darlingtonschaltung (30) gekoppelt ist.

11. Spannungsfeste Beleuchtungssystem-Schnittstellenschaltung (100) gemäß einem der Ansprüche 9 bis 10, wobei die Schaltungsanordnung (50) zur Spannungsbegrenzung eine Leuchtdiode (LED) eines Optokopplers umfasst, die ausgebildet ist, um basierend auf den an den Gleichrichtereingangsanschlüssen (20a, 20b) anliegenden Signalen einen Photoempfänger des Optokopplers anzuregen.

12. Spannungsfeste Beleuchtungssystem-Schnittstellenschaltung (100) gemäß einem der Ansprüche 8 bis 11, wobei die Schaltungsanordnung (50) eine in Sperrrichtung angeordnete Zenerdiode (Z3) aufweist.

13. Spannungsfeste Beleuchtungssystem-Schnittstellenschaltung (100) gemäß einem der vorhergehenden Ansprüche, welches ein, den Gleichrichtereingangsanschlüssen (20a, 20b), vorgeschaltetes Filter (85) aufweist, und wobei das Filter (85) ausgebildet ist, um an die Gleichrichtereingangsanschlüsse (20a, 20b) gelangende Spannungspulse zu dämpfen.

14. Spannungsfeste Beleuchtungssystem-Schnittstellenschaltung (100) gemäß einem der vorhergehenden Ansprüche, wobei die spannungsfeste Schnittstellenschaltung (100) ausgebildet ist Steuer- und/oder Datensignale zwischen einer Steuereinheit (µC), die über zwei Optokoppler (Q5, Q6) mit der spannungsfesten Schnittstellenschaltung (100) gekoppelt ist, und einem Bussystem (15), das über die Gleichrichtereingangsanschlüssen (20a, 20b) mit der spannungsfesten Schnittstellenschaltung (100) gekoppelt ist, birdirektional auszutauschen.

15. Elektrisches Vorschaltgerät für Leuchtmittel, mit einer spannungsfesten Schnittstellenschaltung (100) gemäß einem der Ansprüche 1 bis 14.

16. Beleuchtungssystem (300) zur Steuerung von Leuchtmitteln mit einer zentralen Steuereinheit (310) zur Steuerung eines Betriebszustandes von Leuchtmitteln (210) und zumindest mit einem elektrischen Vorschaltgerät (200) für Leuchtmittel (210) gemäß Anspruch 16, wobei die zentrale Steuereinheit (310) und das elektrische Vorschaltgerät (200) für Leuchtmittel (210) über ein Bussystem (15) zur Übertragung von Daten- und/oder Steuersignalen elektrisch gekoppelt sind.

17. Beleuchtungssystem (300) zur Steuerung von Leuchtmittel gemäß Anspruch 16, wobei das Bussystem (15) ein DALI-Bussystem ist, das ausgebildet ist, Daten- und/oder Steuersignale gemäß einem DALI-Protokoll zwischen der zentralen Steuereinheit (310) und dem elektrischen Vorschaltgerät (200) zu übertragen.

## Claims

1. A voltage-proof lighting system interface circuit (100), having the following features:
A rectifier circuit (20), which is designed, in order to provide a rectified rectifier output voltage at the rectifier output terminals (20c, 20d) in dependence on a rectifier input voltage at the rectifier input terminals (20a, 20b), **characterized in that**
a Darlington circuit (30) which comprises at least two transistors (Q3, Q4), wherein the Darlington circuit has a current path (35) controllable on the output side in dependence on a control signal (62), wherein the current path controllable on the output side is coupled between the rectifier output terminals (20c, 20d),
wherein the current path (35) controllable on the output side is designed, in order to form a variable load in dependence on a control signal (62) between the rectifier output terminals (20c, 20d).

2. A voltage-proof lighting system interface circuit (100) according to Claim 1, wherein the voltage-proof interface circuit also has a capacitor (C1, C7), which is coupled with a control terminal of a transistor (Q3, Q4) of the Darlington circuit (30), and which is configured in order to counteract a change of a current in a current path of the corresponding transistor (Q3, Q4).

3. A voltage-proof lighting system interface circuit (100) according to Claim 2, wherein the capacitor (C1, C7) has a capacitance, which is at least 100 times as great as a Miller capacitance of the transistor, at the control terminal of which the capacitor (C1, C4) is coupled.

4. A voltage-proof lighting system interface circuit (100) according to Claim 2 or 3, wherein a capacitance value of the capacitor (C1, C7) is selected such that a voltage pulse of 1000 volts over a current path (35) controllable on the output side does not lead to a control of the current path (35) controllable on the output side in the case of an inactive control signal (62).

5. A voltage-proof lighting system interface circuit (100) according to any one of the preceding claims, which also has a second capacitor (C1, C7), which is coupled with a control terminal of a second transistor (Q3, Q4) of the Darlington circuit (30), and which is configured, in order to counteract a change of a current in a current path of the second transistor (Q3, Q4).

6. A voltage-proof lighting system interface circuit (100) according to any one of the preceding claims, in which the Darlington circuit (30) has bipolar transistors (Q3, Q4), which have a collector-emitter dielectric strength of at least 500 V, at least 600 V or at least 1000 V.

7. A voltage-proof lighting system interface circuit (100) according to any of the preceding claims, wherein the Darlington circuit (30) has an at least 1500-fold current amplification, so that in a controlled state of the Darlington circuit (30) in the current path (35) controllable on the output side a current is available between 1 mA and 300 mA.

8. A voltage-proof lighting system interface circuit (100) according to any one of the preceding claims, which also has a current source (40), which is coupled between a first rectifier output terminal (20c) and a control terminal (30a) of the Darlington circuit (30), wherein the current source is configured in order to limit the control current of the Darlington circuit.

9. A voltage-proof lighting system interface circuit (100) according to Claim 8, which also has a node (70), which is coupled electrically between the current source (40), the control terminal (30a) of the Darlington circuit (30) and the circuit arrangement (50) for the voltage limitation.

10. A voltage-proof lighting system interface circuit (100) according to Claim 9, wherein the node is also coupled with an optocoupler (Q5) for reception of the control signal (62) and wherein the optocoupler (Q5) is coupled with a control terminal (30a) of the Darlington circuit (30).

11. A voltage-proof lighting system interface circuit (100) according to any one of claims 9 to 10, wherein the circuit arrangement (50) for the voltage limitation comprises a light-emitting diode (LED) of an optocoupler, which is designed in order to excite a photoreceiver of the optocoupler based on the signals at the rectifier input terminals (20a, 20b).

12. A voltage-proof lighting system interface circuit (100) according to any one of Claims 8 to 11, wherein the circuit arrangement (50) has a zener diode (Z3) arranged in the inverse direction.

13. A voltage-proof lighting system interface circuit (100) according to any one of the preceding claims, which has a filter (85) arranged upstream of the rectifier input terminals (20a, 20b), and wherein the filter (85) is designed, in order to attenuate voltage pulses reaching the rectifier input terminals (20a, 20b).

14. A voltage-proof lighting system interface circuit (100) according to any one of the preceding claims, wherein the voltage-proof interface circuit (100) is designed to bidirectionally exchange control- and/or data signals between a control unit (µC), which is coupled via two optocouplers (Q5, Q6) with the voltage-proof interface circuit (100), and a bus system (15) which is coupled via the rectifier input terminals (20a, 20b) with the voltage-proof interface circuit (100).

15. An electrical ballast for illumination means, with a voltage-proof interface circuit (100) according to any one of Claims 1 to 14.

16. A lighting system (300) for the control of illumination means with a central control unit (310) for the control of an operating state of illumination means (210) and at least with an electrical ballast (200) for illumination means (210) according to Claim 16, wherein the central control unit (310) and the electrical ballast (200) for illumination means (210) are electrically coupled via a bus system (15) for the transmission of data- and/or control signals.

17. A lighting system (300) for the control of illumination means according to Claim 16, wherein the bus system (15) is a DALI bus system, which is designed to transmit data- and/or control signals according to a DALI protocol between the central control unit (310) and the electrical ballast (200).

## Revendications

1. Circuit d'interface à résistance diélectrique pour système d'éclairage (100), ayant les caractéristiques suivantes :
un circuit redresseur (20), qui est constitué pour, en fonction d'une tension d'entrée de redresseur présente sur des connexions d'entrée de redresseur (20a, 20b), fournir une tension de sortie de redresseur redressée sur des connexions de sortie de redresseur (20c, 20d), **caractérisé en ce que**
un montage Darlington (30) avec au moins deux transistors (Q3, Q4),
le montage Darlington présentant un trajet de courant (35) côté sortie commandé en fonction d'un signal d'excitation (62),
le trajet de courant (35) côté sortie commandé étant couplé entre les connexions de sortie de redresseur (20c, 20d),
le trajet de courant (35) commandé côté sortie étant constitué pour, entre les connexions de sortie de redresseur (20c, 20d), former une charge modifiable en fonction d'un signal d'excitation (62).

2. Circuit d'interface à résistance diélectrique pour système d'éclairage (100) selon la revendication 1, le circuit d'interface à résistance diélectrique présentant en outre un condensateur (C1, C7) qui est couplé à une connexion de commande d'un transistor (Q3, Q4) du montage Darlington (30), et qui est conçu pour s'opposer à une variation d'un courant dans un trajet de courant du transistor (Q3, Q4) correspondant.

3. Circuit d'interface à résistance diélectrique pour système d'éclairage (100) selon la revendication 2, le condensateur (C1, C7) présentant une capacité qui est au moins 100 fois plus grande qu'une capacité Miller du transistor à la connexion de commande duquel le condensateur (C1, C4) est couplé.

4. Circuit d'interface à résistance diélectrique pour système d'éclairage (100) selon la revendication 2 ou 3, une valeur de capacité du condensateur (C1, C7) étant choisie de telle sorte qu'une impulsion de tension de 1 000 volts sur le trajet de courant (35) côté sortie commandé, quand le signal d'excitation (62) est inactif, ne conduit pas à une commutation du trajet de courant (35) côté sortie commandé.

5. Circuit d'interface à résistance diélectrique pour système d'éclairage (100) selon l'une des revendications précédentes, qui présente en outre un deuxième condensateur (C1, C7) qui est couplé à une connexion de commande d'un deuxième transistor (Q3, Q4) du montage Darlington (30), et qui est conçu pour s'opposer à une variation d'un courant dans un trajet de courant du deuxième transistor (Q3, Q4).

6. Circuit d'interface à résistance diélectrique pour système d'éclairage (100) selon l'une des revendications précédentes, dans lequel le montage Darlington (30) présente des transistors (Q3, Q4) bipolaires qui présentent une résistance diélectrique collecteur-émetteur d'au moins 500 V, d'au moins 600 V ou d'au moins 1 000 V.

7. Circuit d'interface à résistance diélectrique pour système d'éclairage (100) selon l'une des revendications précédentes, le montage Darlington (30) présentant une amplification de courant d'au moins 1 500 fois de telle sorte que, dans un état commuté du montage Darlington (30), un courant entre 1 mA et 300 mA est disponible dans le trajet de courant (35) commandé côté sortie.

8. Circuit d'interface à résistance diélectrique pour système d'éclairage (100) selon l'une des revendications précédentes, qui présente en outre une source de courant (40) qui est couplée entre une première connexion de sortie de redresseur (20c) et une connexion d'excitation (30a) du montage Darlington (30), la source de courant étant conçue pour limiter un courant d'excitation du montage Darlington.

9. Circuit d'interface à résistance diélectrique pour système d'éclairage (100) selon la revendication 8, qui présente en outre un noeud (70) qui est couplé électriquement entre la source de courant (40), la connexion d'excitation (30a) du montage Darlington (30) et un agencement de circuit (50) destiné à la limitation de tension.

10. Circuit d'interface à résistance diélectrique pour système d'éclairage (100) selon la revendication 9, le noeud étant en outre couplé à un optocoupleur (Q5) pour la réception du signal d'excitation (62), et l'optocoupleur (Q5) étant couplé à une connexion d'excitation (30a) du montage Darlington (30).

11. Circuit d'interface à résistance diélectrique pour système d'éclairage (100) selon l'une des revendications 9 à 10, l'agencement de circuit (50) destiné à la limitation de tension comprenant une diode électroluminescente (LED) d'un optocoupleur qui est constituée pour exciter un photorécepteur de l'optocoupleur sur la base des signaux présents sur les connexions d'entrée de redresseur (20a, 20b).

12. Circuit d'interface à résistance diélectrique pour système d'éclairage (100) selon l'une des revendications 8 à 11, l'agencement de circuit (50) présentant une diode Zener (Z3) disposée dans le sens du blocage.

13. Circuit d'interface à résistance diélectrique pour système d'éclairage (100) selon l'une des revendications précédentes, qui présente un filtre (85) monté en amont des connexions d'entrée de redresseur (20a, 20b), et le filtre (85) étant constitué pour amortir des impulsions de tension atteignant les connexions d'entrée de redresseur (20a, 20b).

14. Circuit d'interface à résistance diélectrique pour système d'éclairage (100) selon l'une des revendications précédentes, le circuit d'interface à résistance diélectrique (100) étant constitué pour échanger de façon bidirectionnelle des signaux de commande et/ou de données entre une unité de commande (µC) qui est couplée au circuit d'interface à résistance diélectrique (100) par le biais de deux optocoupleurs (Q5, Q6) et un système de bus (15) qui est couplé au circuit d'interface à résistance diélectrique (100) par le biais des connexions d'entrée de redresseur (20a, 20b).

15. Ballast électrique pour moyens d'éclairage, avec un circuit d'interface à résistance diélectrique (100) selon l'une des revendications 1 à 14.

16. Système d'éclairage (300) destiné à la commande de moyens d'éclairage avec une unité de commande centrale (310) destinée à la commande d'un état de fonctionnement de moyens d'éclairage (210) et au moins avec un ballast électrique (200) pour des moyens d'éclairage 210) selon la revendication 16, l'unité de commande centrale (310) et le ballast électrique (200) pour moyens d'éclairage (210) étant couplés électriquement par le biais d'un système de bus (15) destiné à la transmission de signaux de données et/ou de commande.

17. Système d'éclairage (300) destiné à la commande de moyens d'éclairage selon la revendication 16, le système de bus (15) étant un système de bus DALI qui est constitué pour transmettre des signaux de données et/ou de commande selon un protocole DALI entre l'unité de commande centrale (310) et le ballast électrique (200).
